(19) Europäisches Patentamt
European Patent Office
Office européen des brevets

(11) **EP 3 269 548 B1**

(12) **EUROPEAN PATENT SPECIFICATION**

(45) Date of publication and mention
of the grant of the patent:
**21.08.2019  Bulletin 2019/34**

(21) Application number: **16764906.0**

(22) Date of filing: **11.03.2016**

(51) Int Cl.:
*B32B 27/08* (2006.01)   *B32B 27/30* (2006.01)
*B32B 27/32* (2006.01)   *B65D 65/40* (2006.01)
*B65D 81/24* (2006.01)   *B32B 7/12* (2006.01)

(86) International application number:
**PCT/JP2016/057836**

(87) International publication number:
**WO 2016/148076 (22.09.2016 Gazette 2016/38)**

(54) **LAMINATE FOR HEAT SEALING**

LAMINAT FÜR WÄRMEVERSIEGELUNG

STRATIFIÉ POUR LE THERMOSCELLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **13.03.2015   JP 2015051410**

(43) Date of publication of application:
**17.01.2018   Bulletin 2018/03**

(73) Proprietor: **Kyodo Printing Co., Ltd.
Tokyo 112-8501 (JP)**

(72) Inventors:
 • **TERADA, Akira
  Tokyo 112-8501 (JP)**
 • **HAGIO, Yumiko
  Tokyo 112-8501 (JP)**
 • **OKANO, Yoshinori
  Tokyo 112-8501 (JP)**
 • **OGAWA, Naoki
  Tokyo 112-8501 (JP)**
 • **SUZUKI, Kenta
  Tokyo 112-8501 (JP)**
 • **TSUNODA, Kaori
  Tokyo 112-8501 (JP)**
 • **INOUE, Masa
  Tokyo 112-8501 (JP)**
 • **OGAWA, Tatsuya
  Tokyo 112-8501 (JP)**

(74) Representative: **Krauns, Christian
 Wallinger Ricker Schlotter Tostmann
 Patent- und Rechtsanwälte Partnerschaft mbB
 Zweibrückenstraße 5-7
 80331 München (DE)**

(56) References cited:
**WO-A1-2014/115485      WO-A1-2014/115485
JP-A- H06 136 206        JP-A- H08 506 539
JP-A- 2002 113 823       JP-A- 2006 096 370
JP-A- 2006 096 370       JP-B2- 3 232 317**

EP 3 269 548 B1

**Description**

TECHNICAL FIELD

The present invention relates to a laminate for heat sealing.

BACKGROUND ART

Films formed from ethylene-vinyl alcohol copolymer (EVOH) are widely used in packaging materials due to their superior transparency, gas impermeability, oil resistance, organic solvent resistance and non-adsorption of odors.
However, EVOH film also has the shortcomings of inferior impact resistance, bending fatigue resistance, stretchability, thermoformability, adhesiveness and sealant aptitude. Thus, various attempts have been made to avoid the aforementioned shortcomings in order to use EVOH film as a packaging material.
Patent Document 1 discloses a film for which adhesiveness has been improved by mixing EVOH with 60% or more of ethylene-vinyl acetate copolymer (EVA) and kneading at a specific energy level of 0.3 kWh/kg (1.08 MJ/kg) or more.
Patent Document 2 discloses a film for which processability and stretchability have been improved by mixing EVOH with 10% or less of EVA followed by kneading at a specific energy level of 0.02 kWh/kg (0.072 MJ/kg) or less.
Patent Document 3 discloses a film for which sealant aptitude has been improved by kneading EVOH with a maleic anhydride-modified polyolefin at high shear force.

[Prior Art Documents]

[Patent Documents]

[Patent Document 1] JP3232317B
[Patent Document 2] JP3689152B
[Patent Document 3] JP201328732A.

Document WO2014115485 discloses a packaging bag.

SUMMARY OF THE INVENTION

[Problems to be Solved by the Invention]

Although sealant films using EVOH have superior aroma retention of aromatic components, they undergo large changes in dimensions due to adsorption of moisture in high-humidity environments, and are susceptible to the formation of wrinkles in bulk film rolls caused by absorption of moisture in the production process. In addition to impairing appearance, the formation of wrinkles can cause defective adhesion when laminating with other substrates, blistering or decreased sealing strength.
In addition, in the case of laminating with aluminum foil, the presence of wrinkles can cause the formation of pinholes in the aluminum foil at the locations thereof, thereby resulting in a decrease in gas impermeability while also having the potential to have a detrimental effect on the contents when using as a packaging pouch. These problems are shortcomings that are unable to be avoided by the films disclosed in the aforementioned patent documents.
Thus, a film for heat sealing, which has non-adsorbing properties equivalent to those of EVOH film and does not undergo a dimensional change in a humid environment, is desired.

[Means for Solving the Problems]

As a result of conducting extensive studies, the inventors of the present invention found that the aforementioned problems can be solved by the following means, thereby leading to completion of the present invention. Namely, the present invention is as indicated below.
A laminate for heat sealing (100, 200), comprising:
a non-adsorbing layer (10) containing an ethylene-vinyl alcohol copolymer and an acid-modified polyolefin, and a non-swelling layer (20) laminated directly on the non-adsorbing layer (10) and containing a polyolefin and an acid-modified polyolefin, wherein the non-swelling layer (20) contains 20% by weight to 60% by weight of an acid-modified polyolefin.

(2) The laminate for heat sealing described in (1) above, wherein the acid-modified polyolefin contained in the non-adsorbing layer and the non-swelling layer is a maleic anhydride-modified polyolefin.

(3) The laminate for heat sealing described in any one of (1) to (2) above, wherein the polyolefin is polypropylene.

(4) The laminate for heat sealing described in any one of (1) to (3) above, wherein the non-adsorbing layer contains an acid-modified polypropylene.

(5) The laminate for heat sealing described in any one of (1) to (4) above, wherein the non-adsorbing layer contains 75% by weight to 95% by weight of an ethylene-vinyl alcohol copolymer and 5% by weight to 25% by weight of a maleic anhydride-modified polyolefin.

(6) The laminate for heat sealing described in (5) above, wherein the non-swelling layer contains 25% by weight to 60% by weight of an acid-modified polyolefin.

(7) The laminate for heat sealing described in any one of (1) to (6) above, wherein the non-adsorbing layer is laminated on both sides of the non-swelling layer.

(8) The laminate for heat sealing described in any one of (1) to (7) above, wherein the non-adsorbing layer has a thickness equal to 20% to 70% of the total thickness of the laminate for heat sealing.

(9) A laminate for packaging, comprising a substrate and the laminate for heat sealing described in any one of (1) to (8) above laminated on the substrate.

(10) A package comprising the laminate for packaging described in (9) above, wherein the non-adsorbing layer of the laminate for heat sealing is arranged on the side that is to contact a package contents.

(11) A method for producing a package, including: laminating the laminate for heat sealing described in any one of (1) to (8) above onto a substrate, and heat sealing with the non-adsorbing layers of the laminate for heat sealing in mutual opposition.

[Effects of the Invention]

According to the present invention, a film for heat sealing can be provided which has non-adsorbing properties equivalent to those of EVOH film, and which does not undergo a dimensional change in a humid environment.

## BRIEF DESCRIPTION OF THE DRAWINGS

FIG. 1 is a cross-sectional view of a first aspect of the laminate for heat sealing of the present invention.
FIG. 2 is a cross-sectional view of a second aspect of the laminate for heat sealing of the present invention.
FIG. 3 is a graph indicating the relationship between EVOH content and the adsorbed amount of L-menthol.
FIG. 4 is a graph indicating the relationship between EVOH content and the adsorbed amount of L-menthol.
FIG. 5 is a graph indicating the relationship between EVOH content and the adsorbed amount of L-menthol.

## EMBODIMENTS FOR CARRYING OUT THE INVENTION

<<Laminate for Heat Sealing>>

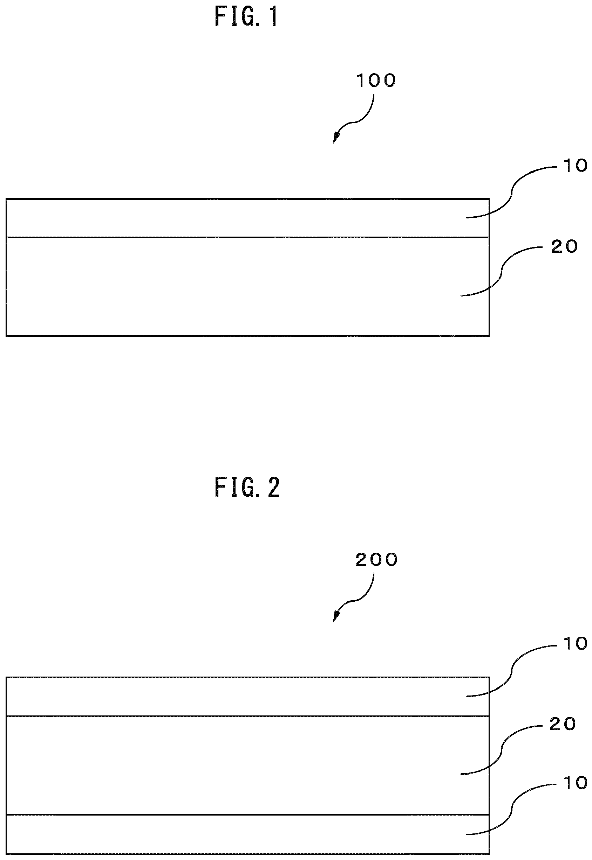

As shown in FIGS. 1 and 2, the laminate for heat sealing (100, 200) of the present invention comprises a non-adsorbing layer (10) and a non-swelling layer (20).

The following provides an explanation of each constituent of the laminate for heat sealing of the present invention.

<Non-Adsorbing Layer>

The non-adsorbing layer is a layer that demonstrates little adsorption, in particular substantially no adsorption of volatile components such as menthol, limonene, methyl salicylate, camphor or tocopherol, as well as aromatic components of foods such as horseradish or mustard, and is capable of retaining aromatic components within a packaging container.

More specifically, in a first aspect of the present invention, the non-adsorbing layer contains EVOH and a maleic anhydride-modified polyolefin. In particular, when the non-adsorbing layer side of the heat sealing laminate cut to a size of 10 cm $\times$ 10 cm is exposed to 3.25 mg/cm$^3$ of L-menthol vapor in an environment at 40°C for 1 week, the adsorbed menthol is extracted with methyl ethyl ketone, and then the amount of L-menthol in the extract is quantified by gas chromatography, the amount of L-menthol adsorbed by the non-adsorbing layer is 0.1 mg or less. Furthermore, the description of Patent Document 3 can be referred to regarding a non-adsorbing layer containing EVOH and a maleic anhydride-modified polyolefin.

In addition, in another aspect of the present invention, when the non-adsorbing side and the non-swelling side are respectively cut to a size of 10 cm × 10 cm, one side is exposed to L-menthol vapor in an environment at 40°C for 1 week, the adsorbed menthol is extracted with methyl ethyl ketone, and then the amount of L-menthol in the extract is quantified by gas chromatography, the ratio of the amount of L-menthol adsorbed by the non-adsorbing layer to the amount of L-menthol adsorbed by the non-swelling layer is 0.1 or less. In addition, this ratio can be 0.05 or less or 0.01 or less, and can be 0.0001 or more, 0.0005 or more or 0.001 or more.

The content of EVOH in the non-adsorbing layer can be 60% by weight or more, 70% by weight or more, 80% by weight or more or 82% by weight or more, and can be 95% by weight or less, 93% by weight or less or 90% by weight or less. The content of the maleic anhydride-modified polyolefin can be 5% by weight or more, 7% by weight or more or 10% by weight or more, and can be 40% by weight or less, 30% by weight or less, 20% by weight or less or 18% by weight or less.

The thickness of the non-adsorbing layer can be 3 $\mu$m or more, 5 $\mu$m or more, 7 $\mu$m or more or 10 $\mu$m or more, and can be 100 $\mu$m or less, 50 $\mu$m or less, 30 $\mu$m or less or 20 $\mu$m or less.

From the viewpoint of non-adsorption, the thickness of the non-adsorbing layer is preferably 15% or more, 20% or more or 30% or more and preferably less than 70%, less than 60% or less than 50% of the total thickness of the laminate for heat sealing.

The non-adsorbing layer may only be arranged on one side of the non-swelling layer as shown in FIG. 1, or may be arranged on both sides of the non-swelling layer as shown in FIG. 2. From the viewpoint of inhibiting the occurrence of curling following film-forming, the non-adsorbing layer is preferably arranged on both sides of the non-swelling layer.

In the case the non-adsorbing layer is arranged on both sides of the non-swelling layer, each non-adsorbing layer may be the same or different.

(Ethylene-Vinyl Alcohol Copolymer)

The ethylene-vinyl alcohol copolymer (EVOH) is a saponification product of an ethylene-vinyl ester copolymer. There are no particular limitations on the ethylene unit content, it can be 10 mol% or more, 15 mol% or more, 20 mol% or more or 25 mol% or more, and 70 mol% or less, 60 mol% or less or 55 mol% or less. In addition, the degree of saponification of the vinyl ester unit of EVOH can be 90 mol% or more, 95 mol% or more, 99 mol% or more or 100 mol%. A high degree of saponification facilitates crystallization and enhances gas impermeability. Further, a high degree of saponification is preferable, for stabilizing thermal stability during melting. A typical example of a vinyl ester is vinyl acetate, and other examples include vinyl propionate, vinyl pivalate, vinyl valerate, vinyl caprate and vinyl benzoate. One type of these vinyl esters may be used alone or two or more types may be used as a mixture. In addition, the EVOH may be used by mixing with EVOH for which at least one of ethylene content, degree of saponification and degree of polymerization differs therefrom. The EVOH may contain other copolymer components within a range that does not impair the object of the present invention. A plurality of EVOH may also be used in combination.

(Acid-Modified Polyolefin)

The acid-modified polyolefin is obtained by graft polymerization of an acid to a polyolefin. Maleic anhydride-modified polyolefin, for example, is used for the acid-modified polyolefin. Polyethylene (low-density polyethylene (LDPE), linear low-density polyethylene (LLDPE), ultra-low-density polyethylene (ULDPE), medium-density polyethylene, high-density polyethylene (HDPE), polypropylene (PP) (polypropylene homopolymer (homo PP), random polypropylene (random PP) or block polypropylene (block PP)) is preferably used for the polyolefin. Multiple types of these acid-modified polyolefins may be used in combination.

For example, a maleic anhydride-modified polyolefin obtained by graft polymerization of 0.05 parts by weight or more, 0.1 part by weight or more, 0.3 parts by weight or more, 0.5 parts by weight or more or 1.0 part by weight or more, or 50 parts by weight or less, 30 parts by weight or less, 20 parts by weight or less, 10 parts by weight or less or 5 parts by weight or less, of maleic anhydride to 100 parts by weight of polyolefin can be used for the maleic anhydride-modified polyolefin. An example of this maleic acid-modified polyolefin is described in JPH9-278956.

(Other Components)

The non-adsorbing layer may also contain optional additives within a range that does not impair the object of the present invention. Examples of additives include heat stabilizers, weathering stabilizers, lubricants, antistatic agents, nucleating agents, fillers, pigments, dyes, flame retardants and anti-blocking agents.

(Non-Swelling Layer)

The non-swelling layer is a layer that has a low rate of dimensional change in a high humidity environment, and is able to act so as to inhibit dimensional changes in the entire heat sealing laminate when the dimensions thereof have the potential to change due to adsorption of moisture by the non-adsorbing layer. In the present invention, the rate of dimensional change refers to the ratio of the dimensional difference of a film before and after exposure to a high humidity environment to the dimensions of the film before exposure to the high humidity environment with respect to one direction, and particularly with respect to the direction in which the film is stretched. More specifically, the rate of dimensional change is represented with the formula indicated below.

$$[Equation\ 1]$$
$$Rate\ of\ dimensional\ change$$
$$= (Dimension\ after\ exposure - Dimension\ before$$
$$exposure)/Dimension\ before\ exposure$$

Although not wishing to be bound by any theory, by adhering a non-adsorbing layer having a large rate of dimensional change to a non-swelling layer having a small rate of dimensional change, overall dimensional change is inhibited as a result of adhesive force with the non-swelling layer acting as an opposing force to the force that attempts to change the dimensions of the non-adsorbing layer.

More specifically, in one aspect of the present invention, the non-swelling layer contains a polyolefin and acid-modified polyolefin.

In addition, in another aspect of the present invention, the ratio of the rate of dimensional change of the non-adsorbing layer to the rate of dimensional change of the non-swelling layer when the non-adsorbing layer and the non-swelling layer are respectively stored for 1 week in an environment at 23°C and 50% relative humidity followed by storing for 4 days in an environment at 40°C and 75% relative humidity is 2.0 or more. This ratio can be 3.0 or more, 4.0 or more or 5.0 or more, and 100.0 or less, 50.0 or less, 30.0 or less or 20.0 or less.

The non-swelling layer contains both a polyolefin and acid-modified polyolefin, the content of the acid-modified polyolefin is 20% by weight or more, 25% by weight or more, 30% by weight or more or 35% by weight or more from the viewpoint of favorable adhesion with the non-adsorbing layer, 60% by weight or less or 50% by weight or less from the viewpoint of cost.

The thickness of the non-swelling layer can be 10 μm or more, 15 μm or more, 20 μm or more or 30 μm or more, and 300 μm or less, 200 μm or less, 150 μm or less or 100 μm or less.

(Polyolefin)

There are no limitations on the polyolefin, and examples thereof include polyethylene (low-density polyethylene (LDPE), linear low-density polyethylene (LLDPE), ultra-low-density polyethylene (ULDPE), medium-density polyethylene, high-density polyethylene (HDPE)), polypropylene (PP) (polypropylene homopolymer (homo PP), random polypropylene (random PP) and block polypropylene (block PP)).

(Acid-Modified Polyolefin)

An acid-modified polyolefin exemplified with respect to the non-adsorbing layer can be used for the acid-modified polyolefin used in the non-swelling layer.

(Other Components)

The non-swelling layer may contain an optional additive within a range that does not impair the object of the present invention. Examples of additives include those exemplified with respect to the non-adsorbing layer.

<Other Layers>

An optional other layer may be laminated on the laminate for heat sealing. For example, an adhesive layer can be laminated between the non-adsorbing layer and the non-swelling layer.

<<Method for Producing Laminate for Heat Sealing>>

The method for producing a laminate for heat sealing includes a kneading step, film-forming step for forming the non-adsorbing layer and the non-swelling layer, and a lamination step for laminating the non-adsorbing layer and the non-swelling layer.

<Kneading Step>

The EVOH and acid-modified polyolefin of the non-adsorbing layer are melted and mixed at a specific energy of 2.2 MJ/Kg or more. The range of the specific energy during melting and mixing is preferably 2.7 MJ/Kg to 12.1 MJ/Kg. Melting and mixing these components at a specific energy of 2.2 MJ/Kg or more results in a preferable mixed state of the resulting resin. In the case the specific energy is 12.5 MJ/kg or less, there is less likelihood of the occurrence of problems such as deterioration of the resin.

Specific energy refers to the energy applied to the resin by melt-kneading equipment per unit weight (kg) during melting and kneading, and refers to a value determined with the following equation such that a larger value indicates a high level of kneading effectiveness.

[Equation 2]

$$\text{Specific energy (MJ/kg)}$$
$$= (\text{Torque (N·m)} \times \text{Kneading machine rotating speed (rad/sec)}/ \text{Resin extrusion rate (kg/h)}) \times (3.60/1000)$$

Here, torque, kneading machine rotating rate, and resin extrusion rate have the meanings indicated below.

Torque: Force required to rotate kneading machine screws
Kneading machine rotating speed: Rotating speed of kneader motor required to rotate kneading machine screws per unit time
Resin extrusion rate: Amount of resin extruded from kneading machine per unit time

Melting and mixing of the EVOH and acid-modified polyolefin can be carried out with a screw kneading machine having two or more screws. In a screw kneading machine having two or more screws, the shapes of the screws and the resin extrusion rate have an effect on specific energy. A screw of a shape that combines a kneading portion, reverse flight portion and/or mixing portion resulting in greater kneading effects (to be referred to as a high shear type) is used more preferably than a general-purpose screw having only a flight portion (to be referred to as a full flight type). A high shear type of twin-screw extruder is used more preferably.

A screw having a shape consisting of a flight screw, pineapple screw and kneading disc can be used alone or in combination for the screw.

In the case the non-swelling layer contains a polyolefin and acid-modified polyolefin, these components may be kneaded in the same manner as described above.

<Film-forming Step>

The film-forming step is a step for forming the non-adsorbing layer and the non-swelling layer. Film-forming can be carried out by a co-extrusion process such as the multilayer inflation molding method, multilayer T-die method or multilayer casting method.

In general, a film obtained by melting and mixing incompatible resin components followed by film-forming is known to employ a sea-island structure in which one of the resins is in the form of the sea while the other resin component is dispersed in the form of islands.

The non-adsorbing layer of the laminate for heat sealing like that used in the present invention, which is formed from a mixed resin obtained by polymer alloying EVOH and an acid-modified polyolefin-based resin, tends to have a structure in which the EVOH is in the form of the sea and the acid-modified polyolefin-based resin is dispersed in the form of islands. In this case, the aspect ratio of the acid-modified polyolefin-based resin distributed by dispersing in the form of islands is preferably 2.0 or more, 2.2 or more or 2.5 or more, and preferably 9.5 or less, 9.3 or less or 9.0 or less.

This aspect ratio is measured by analyzing an image obtained with an atomic force microscope and determining the aspect ratio as the average value of the ratio between the major axis and minor axis of particles of a maleic anhydride-modified polyolefin-based resin distributed by forming islands. Image analysis is carried out using the Mac-View Ver. 4.0 image analyzing particle size distribution measurement software available from Mountech Co., Ltd. This software enables automated measurement of parameters such as aspect ratio or surface area. Values are calculated based on the average of 100 or more particles present in an image.

In the case the aspect ratio of the acid-modified polyolefin-based resin formed in the form of islands is within the aforementioned ranges, suitable heat sealing strength is obtained when non-adsorbing layers of the laminate for heat sealing are heat-sealed while in mutual opposition, thereby making this preferable.

<Lamination Step>

The lamination step is a step for laminating the non-adsorbing layer and the non-swelling layer. Lamination may be carried out by heat sealing the non-adsorbing layer and the non-swelling layer directly, by an extrusion lamination method such as the sand lamination method while interposing an adhesive layer, or by dry lamination. In addition, the non-adsorbing layer and the non-swelling layer may be laminated by co-extrusion.

<<Laminate for Packaging>>

The laminate for packaging of the present invention comprises a substrate and the laminate for heat sealing of the present invention laminated on the substrate.

<Substrate>

The substrate is a substrate onto which the laminate for heat sealing of the present invention is laminated in a package. This substrate preferably imparts a suitable degree of stiffness to the laminate for heat sealing as well as impermeability that prevents entry of moisture or oxygen from the outside.

Examples of such substrates that can be used include substrates made from polyolefin, polyvinyl chloride, polyvinylidene chloride, polychlorotrifluoroethylene, polytetrafluoroethylene, saturated or unsaturated polyester (such as polyethylene terephthalate (PET) or polybutylene terephthalate), polyamide, polyacrylonitrile or combinations thereof. Substrates made with these materials may be used in a single layer or may be used after laminating. A barrier layer such as pure aluminum foil, aluminum alloy foil or an alumina or silica vapor-deposited film may also be laminated for the purpose of further enhancing impermeability.

<<Package>>

The package of the present invention comprises the laminate for packaging of the present invention, and the non-adsorbing layer of the laminate for heat sealing is arranged on the side that is to contact contents of the package.

In the package of the present invention, the laminate for heat sealing of the laminate for packaging of the present invention may be, for example, such that non-adsorbing layers are heat-sealed in mutual opposition.

Examples of the form of the package include a pouch, tube or container. In particular, the package of the present invention is useful as a package for packaging foods having aromatic components as well as cosmetics or pharmaceuticals such as poultices containing volatile active ingredients (volatile components).

<<Method for Producing Package>>

The method for producing a package includes laminating the laminate for heat sealing onto a substrate, and heat sealing with non-adsorbing layers of the laminate for heat sealing in mutual opposition.

[Examples]

[Evaluation of Dimensional Change and Non-

Adsorption: Laminate Using Polyethylene]

<<Film Fabrication>>

<Example 1-1>

A laminate for heat sealing was fabricated with an inflation film lamination machine in the form of a two-type, three-layer film such that a non-swelling layer served as the intermediate layer and non-adsorbing layers served as the inner and outer layers. A resin fabricated by kneading EVOH and maleic anhydride-modified polyethylene at a weight ratio of 88:12 with a high shear twin-screw extruder was used for the non-adsorbing layers, and a resin obtained by mixing LLDPE and maleic anhydride-modified polyethylene at a weight ratio of 70:30 was used for the non-swelling layer. The thickness of the non-adsorbing layers was 10 $\mu$m each and the thickness of the non-swelling layer was 80 $\mu$m.

<Examples 1-2 to 1-6>

Two-type, three-layer laminates for heat sealing were fabricated in the same manner as Example 1-1 with the exception of changing the thickness of the non-swelling layer to the thickness indicated in Table 1.

<Example 1-7>

A two-type, three-layer laminate for heat sealing was fabricated in the same manner as Example 1-5 with the exception of doubling the thickness of each layer.

<Example 1-8>

A two-type, three-layer laminated film was fabricated in the same manner as Example 1-3 with the exception of using a resin obtained by mixing LDPE and maleic anhydride-modified polyethylene at a weight ratio of 50:50 for the non-swelling layer.

<Examples 1-9 to 1-11>

Two-type, three-layer laminated films were fabricated in the same manner as Example 1-8 with the exception of changing the non-swelling layer to the resin blending ratios shown in Table 1.

<Examples 1-12 and 1-13>

Two-type, three-layer laminated films were fabricated in the same manner as Example 1-10 with the exception of changing the non-adsorbing layers to the resin blending ratios shown in Table 1.

<Example 1-14>

A two-type, three-layer laminated film was fabricated in the same manner as Example 1-10 with the exception of changing the maleic anhydride-modified polyethylene of the non-swelling layer to maleic anhydride-modified polypropylene.

<Comparative Example 1-1>

A one-type, three-layer laminate for heat sealing was fabricated in the same manner as Example 1-1 with the exception of using a resin, fabricated by kneading EVOH and maleic anhydride-modified polyethylene at a weight ratio of 88:12 with a high shear twin-screw extruder, having a thickness of 10 $\mu$m as an intermediate layer.

<Comparative Examples 1-2 to 1-5>

The films shown in Table 1 were used at the thicknesses indicated in Table 1.

<<Dimensional Change>>

The laminates for heat sealing of Examples 1-1 to 1-7 and Comparative Example 1-1 were stored for 1 week at 23°C and 50% relative humidity (RH) followed by respectively exposing for 4 days to environments at 40°C and 75% RH and at 40°C and 90% RH. Changes in dimensions after exposure were confirmed visually with a magnifying glass and a scale having a minimum graduation of 0. 1 mm followed by calculation of rate of dimensional change.

<<Non-Adsorption>>

(Test 1)

The laminates or films for heat sealing of Examples 1-1 to 1-14 and Comparative Examples 1-1 to 1-5 were stored for 1 week in an environment at 23°C and 50% RH followed by quantification of the adsorbed amount of L-menthol. Quantification was carried out by cutting each laminate or film for heat sealing to a size of 10 cm $\times$ 10 cm and sealing in Petri dishes with covers having a diameter of 14 cm and depth of 2 cm together with 1 g of L-menthol. Namely, one side of each laminate for heat sealing or film was exposed for 1 week to approximately 3.25 mg/cm$^3$ (1 g/{(14 cm/2)$^2$ $\times$ 3.14 $\times$ 2 cm)} of L-methanol vapor in an atmosphere at 40°C in a Petri dish followed by extracting the menthol adsorbed to the laminate or film for heat sealing following exposure with methyl ethyl ketone, quantifying the amount of L-menthol in the extract by gas chromatography, and calculating the adsorbed amount of L-menthol.

(Test 2)

The laminates for heat sealing of Examples 1-1 to 1-6 and Comparative Example 1-1 were stored for 1 week in an atmosphere at 23°C and 50% RH followed by additionally storing for 4 days at 40°C and 90% RH. Then, after storing for 1 day at 23°C and 50% RH in order to suppress changes in the amount of adsorbed moisture adsorbed by the laminates for heat sealing as well as changes in the adsorbed amount of L-menthol caused by adsorption of moisture on the surface thereof, the adsorbed amount of L-menthol was quantified in the same manner as described above.

<<Heat Sealing>>

The surfaces of the laminates for heat sealing or films of Examples 1-1 to 1-14 and Comparative Examples 1-1 and 1-2 were joined followed by heat sealing under conditions of 140°C, 0.2 MPa and 0.5 sec. The heat sealing strength over a width of 15 mm of the sealed portion was measured with a T-peel test based on JIS Z 0238.
The test results are shown in the following Tables 1-1 and 1-2.

[Table 1]

Table 1-1

| Name | Layer Configuration | | | | | | | | Total Thickness (μm) | Thickness of Non-Adsorbing Layer (μm) | Non-Adsorbing Layer Thickness Ratio (%) |
|---|---|---|---|---|---|---|---|---|---|---|---|
| | Inner/Outer Layers (Non-Adsorbing Layers) | | | Intermediate Layer (Non-Swelling Layer) | | | | | | | |
| | EVOH Content (%) | Acid-Modified Polyolefin | | Thickness (μm) | Polyolefin Resin | | Acid-Modified Polyolefin | | Thickness (μm) | | | |
| | | Type | Blending Ratio (%) | | Type | Blending Ratio (%) | Type | Blending Ratio (%) | | | | |
| Ex. 1-1 | 88 | Modified PE | 12 | 10 | LLDPE | 70 | Modified PE | 30 | 80 | 100 | 20 | 20 |
| Ex. 1-2 | 88 | Modified PE | 12 | 10 | LLDPE | 70 | Modified PE | 30 | 50 | 70 | 20 | 29 |
| Ex. 1-3 | 88 | Modified PE | 12 | 10 | LLDPE | 70 | Modified PE | 30 | 30 | 50 | 20 | 40 |
| Ex. 1-4 | 88 | Modified PE | 12 | 10 | LLDPE | 70 | Modified PE | 30 | 20 | 40 | 20 | 50 |
| Ex. 1-5 | 88 | Modified PE | 12 | 10 | LLDPE | 70 | Modified PE | 30 | 15 | 35 | 20 | 57 |
| Ex. 1-6 | 88 | Modified PE | 12 | 10 | LLDPE | 70 | Modified PE | 30 | 10 | 30 | 20 | 67 |
| Ex. 1-7 | 88 | Modified PE | 12 | 10 | LLDPE | 70 | Modified PE | 30 | 30 | 70 | 40 | 57 |
| Ex. 1-8 | 88 | Modified PE | 12 | 10 | LDPE | 50 | Modified PE | 50 | 30 | 50 | 20 | 40 |
| Ex. 1-9 | 88 | Modified PE | 12 | 10 | LDPE | 40 | Modified PE | 60 | 30 | 50 | 20 | 40 |
| Ex. 1-10 | 88 | Modified PE | 12 | 10 | LDPE | 70 | Modified PE | 30 | 30 | 50 | 20 | 40 |
| Ex. 1-11 | 88 | Modified PE | 12 | 10 | LDPE | 80 | Modified PE | 20 | 30 | 50 | 20 | 40 |

(continued)

| Name | Layer Configuration | | | | | | | | Total Thickness (μm) | Thickness of Non-Adsorbing Layer (μm) | Non-Adsorbing Layer Thickness Ratio (%) |
|---|---|---|---|---|---|---|---|---|---|---|---|
| | Inner/Outer Layers (Non-Adsorbing Layers) | | | Intermediate Layer (Non-Swelling Layer) | | | | | | | |
| | EVOH Content (%) | Acid-Modified Polyolefin | | Thickness (μm) | Polyolefin Resin | | Acid-Modified Polyolefin | | Thickness (μm) | | | |
| | | Type | Blending Ratio (%) | | Type | Blending Ratio (%) | Type | Blending Ratio (%) | | | | |
| Ex. 1-12 | 75 | Modified PE | 25 | 10 | LDPE | 70 | Modified PE | 30 | 30 | 50 | 20 | 40 |
| Ex. 1-13 | 92 | Modified PE | 8 | 10 | LDPE | 70 | Modified PE | 30 | 30 | 50 | 20 | 40 |
| Ex. 1-14 | 88 | Modified PE | 12 | 10 | LDPE | 70 | Modified PE | 30 | 30 | 50 | 20 | 40 |
| Comp. Ex.1-1 | 88 | Modified PE | 12 | 10 | (EVOH) | 88 | Modified PE | 12 | 10 | 30 | 30 | 100 |
| Comp. Ex.1-2 | Commercially available EVOH film 30 μm | | | | | | | | | 30 | - | - |
| Comp. Ex.1-3 | LLDPE film 30 μm | | | | | | | | | 30 | - | - |
| Comp. Ex.1-4 | LLDPE film 50 μm | | | | | | | | | 50 | - | - |
| Comp. Ex.1-5 | LLDPE film 100 μm | | | | | | | | | 100 | - | - |

[Table 2]

Table 1-2

| Name | Dimensional Change | | L-Menthol Adsorbed Amount (mg/100 cm$^2$) | | Heat Sealing Strength (N/15 mm) |
|---|---|---|---|---|---|
| | Avg. Difference at 40°C, 75% RH (%) | Avg. Difference at 40°C, 90% RH (%) | Test 1 | Test 2 | |
| Example 1-1 | -0.1 | 0.1 | 0.04 | 0.06 | 18.5 |
| Example 1-2 | 0.0 | 0.1 | 0.05 | 0.04 | 17.1 |
| Example 1-3 | 0.0 | 0.1 | 0.03 | 0.03 | 16.2 |
| Example 1-4 | -0.1 | 0.1 | 0.04 | 0.03 | 15.0 |
| Example 1-5 | 0.1 | 0.2 | 0.03 | 0.05 | 14.2 |
| Example 1-6 | 0.2 | 0.6 | 0.04 | 0.04 | 13.8 |
| Example 1-7 | 0.1 | 0.3 | 0.03 | - | 18.0 |
| Example 1-8 | -0.1 | - | 0.01 | - | 16.4 |
| Example 1-9 | -0.1 | - | 0.01 | - | 16.2 |
| Example 1-10 | -0.1 | - | 0.01 | - | 16.5 |
| Example 1-11 | -0.1 | - | 0.01 | - | 16.3 |
| Example 1-12 | -0.1 | - | 0.05 | - | 15.4 |
| Example 1-13 | -0.1 | - | 0 | - | 19.7 |
| Example 1-14 | -0.1 | - | 0.01 | - | 16.6 |
| Comp. Ex. 1-1 | 1.4 | 2.3 | 0.04 | 0.04 | 7.9 |
| Comp. Ex. 1-2 | - | - | 0.03 | - | 3.4 |
| Comp. Ex. 1-3 | - | - | 7.38 | - | - |
| Comp. Ex. 1-4 | - | - | 15.32 | - | - |
| Comp. Ex. 1-5 | - | - | 36.66 | - | - |

It was determined that dimensional change increases as the ratio of the thickness of the non-adsorbing layers to the thickness of all layers increase in both the high humidity accelerated environment and normal environment, and that dimensional change tends to increase as the humidity becomes higher for the same temperature based on the rates of dimensional change at 40°C and 75% RH and 40°C and 90% RH.

In addition, when a comparison was made between the dimensional changes of Examples 1-5 and 1-7, in which the ratios of the thickness of the non-adsorbing layers are equal, it was determined that, if the thickness ratios of the non-adsorbing layers are the same, there is no significant change in dimensional change behavior even if the total thickness is doubled.

When non-adsorption is compared between Examples 1-1 to 1-6 and 1-8 to 1-14 and Comparative Examples 1-1 and 1-2, there were no significant changes observed in non-adsorption performance before and after storage, and roughly the same degree of L-menthol adsorption as that of the film of Comparative Example 1-2, which used only a single layer of EVOH, was determined to be demonstrated.

The laminates for heat sealing of Examples 1-1 to 1-14 demonstrated heat sealing strength of 6.0 N/15 mm or more, which is the normal level of heat sealing strength demonstrated by normal packaging pouches as defined in JIS Z 0238, and were determined to have a degree of heat sealing that does not present a problem in terms of practical use.

[Relationship between EVOH Content and Non-

Adsorption Performance: Laminate Using Polyethylene]

<<Film Fabrication>>

<Examples 2-1 and 2-2>

Two-type, three-layer laminated films fabricated in the same manner as the aforementioned Examples 1-10 and 1-12 were used in Examples 2-1 and 2-2, respectively.

<Examples 2-3 to 2-5>

Two-type, three-layer laminated films were fabricated in the same manner as Example 2-1 (Example 1-10) with the exception of changing the resin blending ratio of the non-adsorbing layers as shown in Table 2.

<Comparative Example 2-1>

A two-type, three-layer laminated film was fabricated in the same manner as Example 2-1 (Example 1-10) with the exception of configuring the non-adsorbing layers with EVOH alone.

<Example 2-9>

A two-type, three-layer laminated film fabricated in the same manner as the aforementioned Example 1-3 was used in Example 2-9.

<Examples 2-6 to 2-17>

Two-type, three-layer laminated films were fabricated in the same manner as Example 2-9 (Example 1-3) with the exception of changing the resin blending ratio of the non-adsorbing layers as shown in Table 2.

<Comparative Example 2-2>

A two-type, three-layer laminated film was fabricated in the same manner as Example 2-9 (Example 1-3) with the exception of configuring the non-adsorbing layers with EVOH alone.

<<Dimensional Change>>

The laminates for heat sealing of Examples 2-1 to 2-17 were stored for 1 week at 23°C and 50% relative humidity (RH) followed by respectively exposing for 4 days to an environment at 40°C and 75% RH. Changes in dimensions after exposure were confirmed visually with a magnifying glass and a scale having a minimum graduation of 0. 1 mm followed by calculation of rate of dimensional change.

<<Non-Adsorption>>

Non-adsorption was evaluated in the same manner as the aforementioned Test 1 for the laminates for heat sealing of Examples 2-1 to 2-17 and Comparative Examples 2-1 and 2-2.

<<Heat Sealing>>

The surfaces of the laminates for heat sealing or films of Examples 2-1 to 2-17 and Comparative Examples 2-1 and 2-2 were joined followed by heat sealing under conditions of 140°C, 0.2 MPa and 0.5 sec. The heat sealing strength over a width of 15 mm of the sealed portion was measured with a T-peel test based on JIS Z 0238.

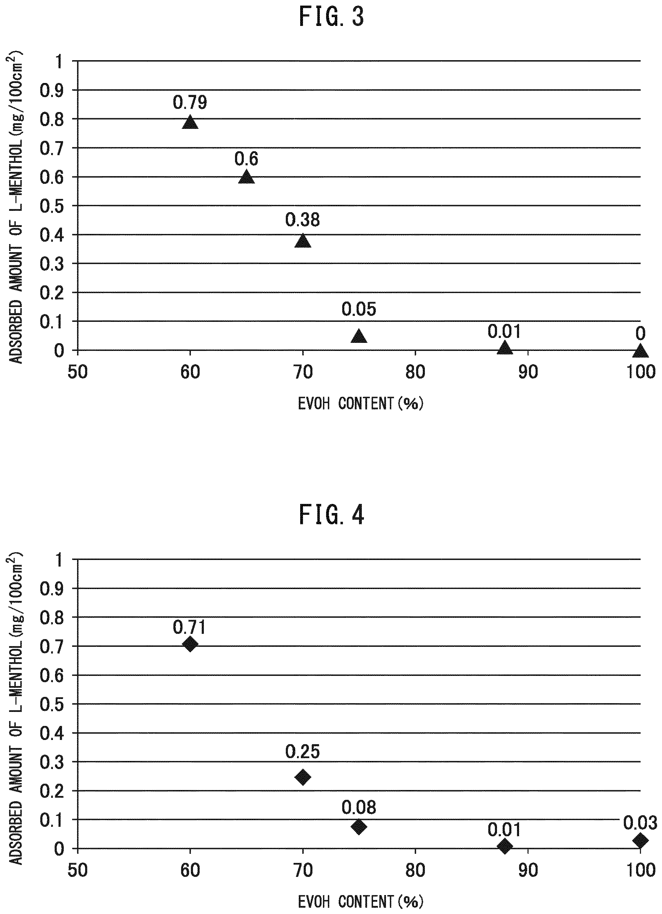

The test results are shown in the following Table 2 and in FIGS. 3 and 4.

[Table 3]

Table 2

| Name | Layer Configuration | | | | | | | | | | | Dimension Change | L-Menthol Adsorbed Amount (mg/100 cm2) | Heat Sealing Strength (N/15 mm) |
|---|---|---|---|---|---|---|---|---|---|---|---|---|---|---|
| | Inner/Outer Layers (Non-Adsorbing Layers) | | | Intermediate Layer (Non-Swelling Layer) | | | | | Total Thickness (µm) | Non-Adsorbing Layer Thickness (µm) | Non-Adsorbing Layer Thickness Ratio (%) | Avg. Difference at 40°C, 75% RH (%) | | |
| | EVOH Blending Ratio (%) | Acid-Modified Polyethylene | | Thickness (µm) | Polyolefin Resin | | Acid-Modified Polyethylene | | Thickness (µm) | | | | | | |
| | | Type | Blend ratio (%) | | Type | Blend Ratio (%) | Type | Blend Ratio (%) | | | | | | | |
| Ex.2-1 | 88 | Mod.PE | 12 | 10 | LDPE | 70 | Mod.PE | 30 | 30 | 50 | 20 | 40 | -0.1 | 0.01 | 16.5 |
| Ex.2-2 | 75 | Mod.PE | 25 | 10 | LDPE | 70 | Mod.PE | 30 | 30 | 50 | 20 | 40 | -0.1 | 0.05 | 15.4 |
| Ex.2-3 | 70 | Mod.PE | 30 | 10 | LDPE | 70 | Mod.PE | 30 | 30 | 50 | 20 | 40 | -0.1 | 0.38 | 16.0 |
| Ex.2-4 | 65 | Mod.PE | 35 | 10 | LDPE | 70 | Mod.PE | 30 | 30 | 50 | 20 | 40 | -0.1 | 0.6 | 15.3 |
| Ex.2-5 | 60 | Mod.PE | 40 | 10 | LDPE | 70 | Mod.PE | 30 | 30 | 50 | 20 | 40 | -0.1 | 0.79 | 16.2 |
| Comp. Ex.2-1 | 100 | - | - | 10 | LDPE | 70 | Mod.PE | 30 | 30 | 5 | 20 | 40 | - | 0 | 5.8 |
| Comp. Ex.2-2 | 100 | - | - | 10 | LLDPE | 70 | Mod.PE | 30 | 30 | 50 | 20 | 40 | - | 0.03 | 6.2 |
| Ex.2-6 | 95 | Mod.PE | 5 | 10 | LLDPE | 70 | Mod.PE | 30 | 30 | 50 | 20 | 40 | -0.1 | 0.03 | 16.8 |
| Ex.2-7 | 92 | Mod.PE | 8 | 10 | LLDPE | 70 | Mod.PE | 30 | 30 | 50 | 20 | 40 | -0.1 | 0.03 | 17.1 |
| Ex.2-8 | 90 | Mod.PE | 10 | 10 | LLDPE | 70 | Mod.PE | 30 | 30 | 50 | 20 | 40 | -0.1 | 0.04 | 16.7 |
| Ex.2-9 | 88 | Mod.PE | 12 | 10 | LLDPE | 70 | Mod.PE | 30 | 30 | 50 | 20 | 40 | 0.0 | 0.03 | 16.2 |
| Ex.2-10 | 86 | Mod.PE | 14 | 10 | LLDPE | 70 | Mod.PE | 30 | 30 | 50 | 20 | 40 | -0.1 | 0.04 | 16.8 |
| Ex.2-11 | 84 | Mod.PE | 16 | 10 | LLDPE | 70 | Mod.PE | 30 | 30 | 50 | 20 | 40 | -0.1 | 0.04 | 14.0 |
| Ex.2-12 | 82 | Mod.PE | 18 | 10 | LLDPE | 70 | Mod.PE | 30 | 30 | 50 | 20 | 40 | -0.1 | 0.04 | 15.7 |
| Ex.2-13 | 80 | Mod.PE | 20 | 10 | LLDPE | 70 | Mod.PE | 30 | 30 | 50 | 20 | 40 | -0.1 | 0.05 | 15.1 |
| Ex.2-14 | 75 | Mod.PE | 25 | 10 | LLDPE | 70 | Mod.PE | 30 | 30 | 50 | 20 | 40 | -0.1 | 0.08 | 15.6 |

| Name | Layer Configuration | | | | | | | | Total Thickness (μm) | Non-Adsorbing Layer Thickness (μm) | Non-Adsorbing Layer Thickness Ratio (%) | Dimension Change | L-Menthol Adsorbed Amount (mg/100 cm$^2$) | Heat Sealing Strength (N/15 mm) |
|---|---|---|---|---|---|---|---|---|---|---|---|---|---|---|
| | Inner/Outer Layers (Non-Adsorbing Layers) | | | Intermediate Layer (Non-Swelling Layer) | | | | | | | | Avg. Difference at 40°C, 75% RH (%) | | |
| | EVOH Blending Ratio (%) | Acid-Modified Polyethylene | | Thickness (μm) | Polyolefin Resin | | Acid-Modified Polyethylene | | Thickness (μm) | | | | | | |
| | | Type | Blend ratio (%) | | Type | Blend Ratio (%) | Type | Blend Ratio (%) | | | | | | | |
| Ex.2-15 | 70 | Mod.PE | 30 | 10 | LLDPE | 70 | Mod.PE | 30 | 30 | 50 | 20 | 40 | -0.1 | 0.25 | 16.2 |
| Ex.2-16 | 60 | Mod.PE | 40 | 10 | LLDPE | 70 | Mod.PE | 30 | 30 | 50 | 20 | 40 | -0.1 | 0.71 | 15.9 |
| Ex.2-17 | 50 | Mod.PE | 50 | 10 | LLDPE | 70 | Mod.PE | 30 | 30 | 50 | 20 | 40 | -0.1 | 3.13 | 13.9 |

FIG. 3 indicates the relationship between EVOH content and the adsorbed amount of L-menthol in the case of using LDPE for the non-swelling layer, while FIG. 4 indicates the relationship between EVOH content and the adsorbed amount of L-menthol in the case of using LLDPE for the non-swelling layer.

It is understood from Table 2 and FIGS. 3 and 4 that the laminates for heat sealing of Examples 2-1 to 2-2 and Examples 2-6 to 2-14, which contain 75% by weight to 95% by weight of ethylene-vinyl alcohol copolymer and 5% by weight to 25% by weight of maleic anhydride-modified polyolefin, demonstrate favorable non-adsorption in comparison with Examples 2-3 to 2-5 and Comparative Examples 2-1 and 2-2.

The laminates for heat sealing of Examples 2-1 to 2-17 demonstrated heat sealing strength of 6.0 N/15 mm or more, which is the normal level of heat sealing strength demonstrated by packaging pouches as defined in JIS Z 0238, and were determined to have a degree of heat sealing that does not present a problem in terms of practical use.

[Relationship between Acid-Modified Polyolefin Content in Non-Swelling Layer and Interlayer

Adhesiveness: Laminate Using Polyethylene]

<<Film Fabrication>>

<Examples 3-1 to 3-4>

Two-type, three-layer laminated films were fabricated in the same manner as the aforementioned Example 1-1 with the exception of changing the resin blending ratio of the non-swelling layer as shown in Table 3. Furthermore, Example 3-3 employed the same configuration as the aforementioned Example 1-3.

<Examples 3-5 to 3-9>

Two-type, three-layer laminated films were fabricated in the same manner as Example 3-1 with the exception of using LDPE for the polyolefin of the non-swelling layer and changing the resin blending ratio as shown in FIG. 3. Furthermore, Examples 3-6 to 3-9 employed the same configuration as the aforementioned Examples 1-11, 1-10, 1-8 and 1-9, respectively.

<<Interlayer Adhesiveness>>

The laminates for heat sealing of Examples 3-1 to 3-9 were stored for 1 week in an environment at 23°C and 50% RH followed by affixing Cellotape® to the outer layer side of the laminated films with a roller and cutting to a size of 15 mm × 100 mm. The Cellotape® was peeled from the cut samples and the occurrence of separation between the outside and intermediate layer was confirmed followed by evaluating 10 samples and confirming the number of samples in which separation was observed.

The test results are shown in Table 3.

[Table 4]

EP 3 269 548 B1

Table 3

| Name | Layer Configuration | | | | | | | | Total Thickness (μm) | Non-Adsorbing Layer Thickness (μm) | Non-Adsorbing Layer Thickness Ratio (%) | No. of Samples Exhibiting Separation between Outer Layers and Intermediate Layer |
|---|---|---|---|---|---|---|---|---|---|---|---|---|
| | Inner/Outer Layers (Non-Adsorbing Layers) | | | Intermediate Layer (Non-Swelling Layer) | | | | | | | | |
| | EVOH Blending Ratio (%) | Acid-Modified Polyolefin | | Thickness (μm) | Polyolefin Resin | | Acid-Modified Polyolefin | | Thickness (μm) | | | |
| | | Type | Blending Ratio (%) | | Type | Blending Ratio (%) | Type | Blending Ratio (%) | | | | |
| Ex. 3-1 | 88 | Modified PE | 12 | 10 | LLDPE | 90 | Modified PE | 10 | 30 | 50 | 20 | 40 | 10 |
| Ex. 3-2 | 88 | Modified PE | 12 | 10 | LLDPE | 80 | Modified PE | 20 | 30 | 50 | 20 | 40 | 2 |
| Ex. 3-3 | 88 | Modified PE | 12 | 10 | LLDPE | 70 | Modified PE | 30 | 30 | 50 | 20 | 40 | 0 |
| Ex. 3-4 | 88 | Modified PE | 12 | 10 | LLDPE | 50 | Modified PE | 50 | 30 | 50 | 20 | 40 | 0 |
| Ex. 3-5 | 88 | Modified PE | 12 | 10 | LDPE | 90 | Modified PE | 10 | 30 | 50 | 20 | 40 | 10 |
| Ex. 3-6 | 88 | Modified PE | 12 | 10 | LDPE | 80 | Modified PE | 20 | 30 | 50 | 20 | 40 | 3 |
| Ex. 3-7 | 88 | Modified PE | 12 | 10 | LDPE | 70 | Modified PE | 30 | 30 | 50 | 20 | 40 | 0 |
| Ex. 3-8 | 88 | Modified PE | 12 | 10 | LDPE | 50 | Modified PE | 50 | 30 | 50 | 20 | 40 | 0 |
| Ex. 3-9 | 88 | Modified PE | 12 | 10 | LDPE | 40 | Modified PE | 60 | 30 | 50 | 20 | 40 | 0 |

18

It is understood from Table 3 that, both in the case the polyolefin is LLDPE (Examples 3-1 to 3-4) and in the case the polyolefin is LDPE (Examples 3-5 to 3-9), a blending ratio of the acid-modified polyolefin in the non-swelling layer of 20% by weight or more makes it possible to inhibit separation between the non-adsorbing layers and non-swelling layer. In addition, it is understood that a blending ratio of the acid-modified polyolefin in the non-swelling layer of 30% by weight or more makes it possible to further inhibit separation between the non-adsorbing layers and non-swelling layer.

The laminates for heat sealing of Examples 3-1 to 3-9 demonstrated a degree of heat sealing that does not present a problem in terms of practical use.

[Evaluation of Laminates Using Acid-Modified Polypropylene]

<<Film Fabrication>>

<Example 4-1>

A laminate for heat sealing was fabricated in the form of a two-type, three-layer film with an inflation film lamination machine such that a non-swelling layer served as the intermediate layer and non-adsorbing layers served as the inner layer and outer layer. A resin fabricated by kneading EVOH and maleic anhydride-modified polypropylene at a weight ratio of 88:12 with a high shear twin-screw extruder was used for the non-adsorbing layers, and a resin obtained by mixing LLDPE and maleic anhydride-modified polypropylene at a weight ratio of 70:30 was used for the non-swelling layer. The thickness of the non-adsorbing layers was 10 $\mu$m each and the thickness of the non-swelling layer was 30 $\mu$m.

(Example 4-2)

A two-type, three-layer film was fabricated in the same manner as Example 4-1 with the exception of using LLDPE and maleic anhydride-modified polyethylene for the non-swelling layer.

<Examples 4-3 to 4-5>

Two-type, three-layer films were fabricated in the same manner as Example 4-1 with the exception of incorporating the non-adsorbing layers as shown in Table 1.

<Comparative Example 4-1>

A two-type, three-layer film was fabricated in the same manner as Example 4-1 with the exception of using for the non-swelling layer a resin that was fabricated by kneading EVOH and maleic anhydride-modified polypropylene at a weight ratio of 88:12 with a high shear twin-screw extruder.

<Example 4-6>

A two-type, three-layer film was fabricated in the same manner as Example 4-1 with the exception of using maleic anhydride-modified polyethylene for the acid-modified polyolefin in the non-adsorbing layers and non-swelling layer.

<<Dimensional Change>>

The laminates for heat sealing of Examples 4-1 to 4-6 and Comparative Example 4-1 were stored for 1 week at 23°C and 50% relative humidity (RH) followed by exposing for 4 days to an environment at 40°C and 75% RH. Changes in dimensions after exposure were confirmed visually with a magnifying glass and a scale having a minimum graduation of 0. 1 mm followed by calculation of rate of dimensional change.

<<Non-Adsorption>>

Non-adsorption was evaluated in the same manner as the aforementioned Test 1 for the laminates for heat sealing of Examples 4-1 to 4-6 and Comparative Example 4-1.

<<Evaluation of Resin Deposits during Processing>

The presence of resin deposits (residue) on the die lips of the twin-screw extruder was confirmed visually when the resins used for the non-adsorbing layers of Examples 4-1 to 4-6 and Comparative Example 4-1 were fabricated with a high shear twin-screw extruder.

<<Interlayer Adhesiveness>>

The laminates for heat sealing of Examples 4-1 to 4-6 were stored for 1 week in an environment at 23°C and 50% RH followed by affixing Cellotape® to the outer layer side of the laminated films with a roller and cutting to a size of 15 mm × 100 mm. The Cellotape® was peeled from the cut samples and the occurrence of separation between the outside and intermediate layer was confirmed followed by evaluating 10 samples and confirming the number of samples in which separation was observed.
The test results are shown in Tables 4 and 5.

[Table 5]

Table 4

| Name | Layer Configuration | | | | | | | | | Dimension Change | Inhibition of Resin Deposits during Processing | L-Menthol Adsorbed Amount (mg/100 cm$^2$) | No. of Samples Exhibiting Separation between Outer Layers and Intermediate Layer |
|---|---|---|---|---|---|---|---|---|---|---|---|---|---|
| | Inner/Outer Layers | | | Intermediate Layer | | | | | | Avg Difference at 40°C, 75% RH (%) | | | |
| | EVOH Content (%) | Acid-Modified Polyolefin | | Thickness (μm) | Polyolefin | | Acid-Modified Polyolefin | | Thickness (μm) | | | | |
| | | Type | Blending Ratio (%) | | Type | Blending Ratio (%) | Type | Blending Ratio (%) | | | | | |
| Ex. 4-1 | 88 | Modified PP | 12 | 10 | LDPE | 70 | Modified PP | 30 | 30 | -0.1 | Yes | 0.01 | 0 |
| Ex. 4-2 | 80 | Modified PP | 20 | 10 | LLDPE | 70 | Modified PE | 30 | 30 | -0.1 | Yes | 0.06 | 0 |
| Ex. 4-3 | 80 | Modified PP | 20 | 10 | LDPE | 70 | Modified PP | 30 | 30 | -0.1 | Yes | 0.01 | 0 |
| Ex. 4-4 | 75 | Modified PP | 25 | 10 | LDPE | 70 | Modified PP | 30 | 30 | -0.1 | Yes | 0.04 | 0 |
| Ex. 4-5 | 70 | Modified PP | 30 | 10 | LDPE | 70 | Modified PP | 30 | 30 | -0.1 | Yes | 0.67 | 0 |
| Comp. Ex. 4-1 | 88 | Modified PP | 12 | 10 | (EVOH) | 88 | Modified PP | 12 | 30 | 1.1 | Yes | 0.03 | - |
| Ex. 4-6 | 88 | Modified PE | 12 | 10 | LLDPE | 70 | Modified PE | 30 | 30 | 0.0 | No | 0.03 | 0 |

EP 3 269 548 B1

The laminates for heat sealing of Examples 4-1 and 4-2 are understood to demonstrate hardly any dimensional changes in a humid environment in the same manner as the laminates for heat sealing using maleic anhydride-modified polyethylene.

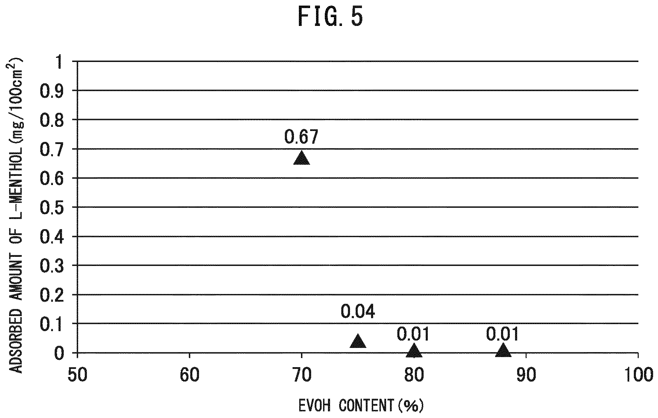

It is understood from Table 4 and FIG. 5 that the laminates for heat sealing of Examples 4-1 to 4-5, which contain 75% by weight to 95% by weight of ethylene-vinyl alcohol copolymer and 5% by weight to 25% by weight of maleic anhydride-modified polypropylene, demonstrate favorable non-adsorption in the same manner as the laminates for heat sealing of using maleic anhydride-modified polyethylene.

Resin deposits were determined to not be present when fabricating the resin used for the non-adsorbing layers in Examples 4-1 to 4-5, in which maleic anhydride-modified polypropylene is used for the non-adsorbing layers. Although not wishing to be bound by any theory, this is thought to be due to acid-modified polypropylene resin exhibiting little elastic force and undergoing hardly any swelling when compressed and discharged from the die lip outlet of the twin-screw extruder.

As a result of the blending ratio of acid-modified polypropylene in the non-swelling layer being 30% by weight or more, separation between the non-adsorbing layers and non-swelling layer is understood to be able to be inhibited in the same manner as in the case of using acid-modified polyethylene for the non-swelling layer.

The laminates for heat sealing of Examples 4-1 to 4-6 were determined to have a degree of heat sealing that does not present a problem in terms of practical use.

[Evaluation of Laminates Using Polypropylene]

<<Film Fabrication>>

<Example 5-1>

A laminate for heat sealing was fabricated with a T-die multilayer film lamination machine in the form of a two-type, three-layer film such that a non-swelling layer served as the intermediate layer and non-adsorbing layers served as the inner and outer layers. A resin fabricated by kneading EVOH and maleic anhydride-modified polyethylene at a weight ratio of 88:12 with a high shear twin-screw extruder was used for the non-adsorbing layers, and a resin obtained by mixing homo PP and maleic anhydride-modified polyethylene at a weight ratio of 70:30 was used for the non-swelling layer. The thickness of the non-adsorbing layers was 10 μm each and the thickness of the non-swelling layer was 30 μm.

<Examples 5-2 and 5-3>

Two-type, three-layer laminated films were fabricated in the same manner as Example 5-1 with the exception of using the polypropylenes shown in Table 5 for the polypropylene in the non-swelling layer.

<Example 5-4>

A two-type, three-layer laminated film was fabricated in the same manner as Example 5-1 with the exception of using LDPE for the polyolefin in the non-swelling layer.

<Examples 5-5 to 5-7>

Two-type, three-layer laminated films were fabricated in the same manner as Example 5-1 with the exception of incorporating the resin used in the non-swelling layer as shown in Table 5.

<Example 5-8>

A two-type, three-layer laminated film was fabricated in the same manner as Example 5-1 with the exception of using maleic anhydride-modified polyethylene for the acid-modified polyolefin in the non-swelling layer.

<Examples 5-9 to 5-11>

Two-type, three-layer laminated films were fabricated in the same manner as Example 5-1 with the exception of using maleic anhydride-modified polyethylene for the acid-modified polyolefin in the non-adsorbing layers and non-swelling layer, and incorporating the resin used in the non-adsorbing layers as shown in Table 5.

<Example 5-12>

A two-type, three-layer laminated film was fabricated in the same manner as Example 5-1 with the exception of using maleic anhydride-modified polyethylene for the acid-modified polyolefin in the non-adsorbing layers and non-swelling layer, and using random PP for the polyolefin in the non-swelling layer.

<Comparative Example 5-1>

A two-type, three-layer laminated film was fabricated in the same manner as Example 5-1 with the exception of using a resin for the non-swelling layer fabricated by kneading EVOH and maleic anhydride-modified polypropylene at a weight ratio of 88:12 with a high shear twin-screw extruder.

<<Water Vapor Impermeability>>

Water vapor permeability of the laminates for heat sealing of Examples 5-1 to 5-12 and Comparative Example 5-1 was measured under conditions of 40°C and 90% RH using a water vapor permeability measuring device (Permatran-W Model 1398, Mocon Inc.).

<<Dimensional Change>>

The laminates for heat sealing of Examples 5-1 to 5-12 and Comparative Example 5-1 were stored for 1 week at 23°C and 50% relative humidity (RH) followed by exposing for 4 days to an environment at 40°C and 75% RH. Changes in dimensions after exposure were confirmed visually with a magnifying glass and a scale having a minimum graduation of 0. 1 mm followed by calculation of rate of dimensional change.

<<Non-Adsorption>>

Non-adsorption was evaluated in the same manner as the aforementioned Test 1 for the laminates for heat sealing of Examples 5-1 to 5-12 and Comparative Example 5-1.

The test results are shown in Table 5.

[Table 6]

Table 5

| Name | Layer Configuration | | | | | | | | Total Thickness (µm) | Non-Adsorbing Layer Thickness (µm) | Non-Adsorbing Layer Thickness Ratio (%) | Water Vapor Permeability (g/m$^2$ ·day) | Dimension Change Rate (%) 40°C, 75% RH | L-Menthol Adsorbed Amount (mg/100 cm$^2$) |
|---|---|---|---|---|---|---|---|---|---|---|---|---|---|---|
| | Inner/Outer Layers (Non-Adsorbing Layers) | | | Intermediate Layer (Non-Swelling Layer) | | | | | | | | | | |
| | EVOH Content (%) | Acid-Modified Polyolefin | | Thickness (µm) | Polyolefin | | Acid-Modified Polyolefin | | Thickness (µm) | | | | | | |
| | | Type | Blending Ratio (%) | | Type | Blending Ratio (%) | Type | Blending Ratio (%) | | | | | | | |
| Ex.5-1 | 88 | Mod PP | 12 | 10 | HomoPP | 70 | Mod PP | 30 | 30 | 50 | 20 | 40 | 8.4 | -0.1 | 0.01 |
| Ex.5-2 | 88 | Mod PP | 12 | 10 | BlockPP | 70 | Mod PP | 30 | 30 | 50 | 20 | 40 | 9.0 | -0.1 | 0.01 |
| Ex.5-3 | 88 | Mod PP | 12 | 10 | RandomPP | 70 | Mod PP | 30 | 30 | 50 | 20 | 40 | 9.3 | -0.1 | 0.01 |
| Ex.5-4 | 88 | Mod PP | 12 | 10 | LDPE | 70 | Mod PP | 30 | 30 | 50 | 20 | 40 | 15.5 | -0.1 | 0.01 |
| Ex.5-5 | 88 | Mod PP | 12 | 10 | HomoPP | 90 | Mod PP | 10 | 30 | 50 | 20 | 40 | 7.6 | -0.1 | 0.01 |
| Ex.5-6 | 88 | Mod PP | 12 | 10 | HomoPP | 40 | Mod PP | 60 | 30 | 50 | 20 | 40 | 11.8 | -0.1 | 0.01 |
| Ex.5-7 | 88 | Mod PP | 12 | 10 | HomoPP | 30 | Mod PP | 70 | 30 | 50 | 20 | 40 | 14.1 | -0.1 | 0.01 |
| Ex.5-8 | 88 | Mod PP | 12 | 10 | HomoPP | 70 | Mod PE | 30 | 30 | 50 | 20 | 40 | 8.1 | -0.1 | 0.01 |
| Ex.5-9 | 92 | Mod PE | 8 | 10 | HomoPP | 70 | Mod PE | 30 | 30 | 50 | 20 | 40 | 7.8 | -0.1 | 0.00 |
| Ex.5-10 | 88 | Mod PE | 12 | 10 | HomoPP | 70 | Mod PE | 30 | 30 | 50 | 20 | 40 | 8.1 | -0.1 | 0.01 |
| Ex.5-11 | 75 | Mod PE | 25 | 10 | HomoPP | 70 | Mod PE | 30 | 30 | 50 | 20 | 40 | 7.4 | 0.0 | 0.05 |

(continued)

| Name | Layer Configuration | | | | | | | | Total Thickness (μm) | Non-Adsorbing Layer Thickness (μm) | Non-Adsorbing Layer Thickness Ratio (%) | Water Vapor Permeability (g/m² ·day) | Dimension Change Rate (%) 40°C, 75% RH | L-Menthol Adsorbed Amount (mg/100 cm²) |
|---|---|---|---|---|---|---|---|---|---|---|---|---|---|---|
| | Inner/Outer Layers (Non-Adsorbing Layers) | | | Intermediate Layer (Non-Swelling Layer) | | | | | | | | | | |
| | EVOH Content (%) | Acid-Modified Polyolefin | | Thickness (μm) | Polyolefin | | Acid-Modified Polyolefin | | Thickness (μm) | | | | | | |
| | | Type | Blending Ratio (%) | | Type | Blending Ratio (%) | Type | Blending Ratio (%) | | | | | | | |
| Ex.5-12 | 88 | Mod PE | 12 | 10 | RandomPP | 70 | Mod PE | 30 | 30 | 50 | 20 | 40 | 10.8 | 0.0 | 0.01 |
| Comp. Ex. 5-1 | 88 | Mod PP | 12 | 10 | (EVOH) | 88 | Mod PP | 12 | 30 | 50 | 20 | 40 | 77.3 | 1.1 | 0.01 |

The laminates for heat sealing of Examples 5-1 to 5-12 are understood to allow the obtaining of favorable results in the same manner as other examples with respect to any of moisture adsorption and non-adsorption. Moreover, the laminates for heat sealing of Examples 5-1 to 5-3 and Examples 5-5 to 5-12, in which polypropylene was used for the polyolefin of the non-swelling layer, are understood to have favorable water vapor impermeability in comparison with the laminate for heat sealing of Example 5-4, in which LDPE was used for the polyolefin of the non-swelling layer. A high level of water vapor impermeability makes it possible to inhibit permeability of moisture present in the outside air from the ends of sealed portions when using as a packaging pouch by laminating with aluminum or other substrate, and can be expected to demonstrate the effect of enhancing storageability in the case of storing contents susceptible to the effects of moisture in a pouch.

In addition, the laminates for heat sealing of Examples 5-1 to 5-12 demonstrated a degree of heat sealing that does not present a problem in terms of practical use.

EXPLANATIONS OF LETTERS OR NUMERALS

   10 Non-adsorbing layer
   20 Non-swelling layer
   100 Laminate for heat sealing of a first aspect of the present invention
   200 Laminate for heat sealing of a second aspect of the present invention

**Claims**

1.  A laminate for heat sealing (100, 200), comprising:

    a non-adsorbing layer (10) containing an ethylene-vinyl alcohol copolymer and an acid-modified polyolefin, and
    a non-swelling layer (20) laminated directly on the non-adsorbing layer (10) and containing a polyolefin and an acid-modified polyolefin,
    wherein the non-swelling layer (20) contains 20% by weight to 60% by weight of an acid-modified polyolefin.

2.  The laminate for heat sealing (100, 200) according to claim 1,
    wherein the acid-modified polyolefin contained in the non-adsorbing layer (10) and the non-swelling layer (20) is a maleic anhydride-modified polyolefin.

3.  The laminate for heat sealing (100, 200) according to any one of claim 1 or 2, wherein the polyolefin is polypropylene.

4.  The laminate for heat sealing (100, 200) according to any one of claims 1 to 3, wherein the non-adsorbing layer (10) contains an acid-modified polypropylene.

5.  The laminate for heat sealing according (100, 200) to any one of claims 1 to 4, wherein the non-adsorbing layer (10) contains 75% by weight to 95% by weight of an ethylene-vinyl alcohol copolymer and 5% by weight to 25% by weight of an acid-modified polyolefin.

6.  The laminate for heat sealing (100, 200) according to any one of claims 1 to 5, wherein the non-swelling layer (20) contains 25% by weight to 60% by weight of an acid-modified polyolefin.

7.  The laminate for heat sealing (100, 200) according to any one of claims 1 to 6, wherein the non-adsorbing layer (10) is laminated on both sides of the non-swelling layer (20).

8.  The laminate for heat sealing (100, 200) according to any one of claims 1 to 7, wherein the non-adsorbing layer (10) has a thickness equal to 20% to 70% of the total thickness of the laminate for heat sealing.

9.  A laminate for packaging, comprising a substrate and the laminate for heat sealing (100, 200) according to any one of claims 1 to 8 laminated on the substrate.

10. A package comprising the laminate for packaging according to claim 9, wherein the non-adsorbing layer (10) of the laminate for heat sealing (100, 200) is arranged on the side that is to contact a package contents.

**11.** A method for producing a package, comprising: laminating the laminate for heat sealing (100, 200) according to any one of claims 1 to 8 onto a substrate, and heat sealing with the non-adsorbing layers (10) of the laminate for heat sealing (100, 200) in mutual opposition.

**Patentansprüche**

**1.** Laminat zum Heißsiegeln (100, 200), welches aufweist:

eine nicht adsorbierende Schicht (10), die ein Ethylen-Vinylalkohol-Copolymer und ein mit Säure modifiziertes Polyolefin enthält, und
eine nicht quellende Schicht (20), die direkt auf die nicht adsorbierende Schicht (10) laminiert worden ist und die ein Polyolefin und ein mit Säure modifiziertes Polyolefin enthält,
wobei die nicht quellende Schicht (20) 20 Gewichtsprozent bis 60 Gewichtsprozent eines mit Säure modifizierten Polyolefins enthält.

**2.** Laminat zum Heißsiegeln (100, 200) nach Anspruch 1, wobei das in der nicht adsorbierenden Schicht (10) und der nicht quellenden Schicht (20) enthaltene mit Säure modifizierte Polyolefin ein mit Maleinsäureanhydrid modifiziertes Polyolefin ist.

**3.** Laminat zum Heißsiegeln (100, 200) nach einem der Ansprüche 1 oder 2, wobei das Polyolefin ein Polypropylen ist.

**4.** Laminat zum Heißsiegeln (100, 200) nach einem der Ansprüche 1 bis 3, wobei die nichtadsorbierende Schicht (10) ein mit Säure modifiziertes Polypropylen enthält.

**5.** Laminat zum Heißsiegeln (100, 200) nach einem der Ansprüche 1 bis 4, wobei die nicht adsorbierende Schicht (10) 75 Gewichtsprozent bis 95 Gewichtsprozent eines Ethylen-Vinylalkohol-Copolymers und 5 Gewichtsprozent bis 25 Gewichtsprozent eines mit Säure modifizierten Polyolefins enthält.

**6.** Laminat zum Heißsiegeln (100, 200) nach einem der Ansprüche 1 bis 5, wobei die nicht quellende Schicht (20) 25 Gewichtsprozent bis 60 Gewichtsprozent eines mit Säure modifizierten Polyolefins enthält.

**7.** Laminat zum Heißsiegeln (100, 200) nach einem der Ansprüche 1 bis 6, wobei die nicht adsorbierende Schicht (10) auf beide Seiten der nicht quellenden Schicht (20) laminiert worden ist.

**8.** Laminat zum Heißsiegeln (100, 200) nach einem der Ansprüche 1 bis 7, wobei die nicht adsorbierende Schicht (10) eine Dicke von 20 % bis 70 % der Gesamtdicke des Laminats zum Heißsiegeln aufweist.

**9.** Laminat zum Verpacken, welches ein Substrat und das Laminat zum Heißsiegeln (100, 200) nach einem der Ansprüche 1 bis 8, das auf das Substrat laminiert worden ist, aufweist.

**10.** Verpackung, welche das Laminat zum Verpacken nach Anspruch 9 aufweist, wobei die nicht adsorbierende Schicht (10) des Laminats zum Heißsiegeln (100, 200) auf der Seite angeordnet ist, die einen Verpackungsinhalt kontaktieren soll.

**11.** Verfahren zum Herstellen einer Verpackung, welches aufweist:

ein Laminieren des Laminats zum Heißsiegeln (100, 200) nach einem der Ansprüche 1 bis 8 auf ein Substrat und ein Heißsiegeln mit den nicht adsorbierenden Schichten (10) des Laminats zum Heißsiegeln (100, 200) in gegenläufiger Richtung.

**Revendications**

**1.** Stratifié pour le thermoscellage (100, 200), comprenant :

une couche non adsorbante (10) contenant un copolymère d'éthylène-alcool vinylique et une polyoléfine modifiée par un acide, et

27

une couche non expansible (20) appliquée directement sur la couche non adsorbante (10) et contenant une polyoléfine et une polyoléfine modifiée par un acide,

dans lequel la couche non expansible (20) contient 20 % en poids à 60 % en poids d'une polyoléfine modifiée par un acide.

2. Stratifié pour le thermoscellage (100, 200) selon la revendication 1, dans lequel la polyoléfine modifiée par un acide contenue dans la couche non adsorbante (10) et la couche non expansible (20) est une polyoléfine modifiée par un anhydride maléique.

3. Stratifié pour le thermoscellage (100, 200) selon l'une quelconque de la revendication 1 ou 2, dans lequel la polyoléfine est du polypropylène.

4. Stratifié pour le thermoscellage (100, 200) selon l'une quelconque des revendications 1 à 3, dans lequel la couche non adsorbante (10) contient un polypropylène modifié par un acide.

5. Stratifié pour le thermoscellage (100, 200) selon l'une quelconque des revendications 1 à 4, dans lequel la couche non adsorbante (10) contient 75 % en poids à 95 % en poids d'un copolymère d'éthylène-alcool vinylique et 5 % en poids à 25 % en poids d'une polyoléfine modifiée par un acide.

6. Stratifié pour le thermoscellage (100, 200) selon l'une quelconque des revendications 1 à 5, dans lequel la couche non expansible (20) contient 25 % en poids à 60 % en poids d'une polyoléfine modifiée par un acide.

7. Stratifié pour le thermoscellage (100, 200) selon l'une quelconque des revendications 1 à 6, dans lequel la couche non adsorbante (10) est appliquée des deux côtés de la couche non expansible (20).

8. Stratifié pour le thermoscellage (100, 200) selon l'une quelconque des revendications 1 à 7, dans lequel la couche non adsorbante (10) a une épaisseur égale à 20 % à 70 % de l'épaisseur totale du stratifié pour le thermoscellage.

9. Stratifié pour l'emballage, comprenant un substrat et le stratifié pour le thermoscellage (100, 200) selon l'une quelconque des revendications 1 à 8 appliqué sur le substrat.

10. Emballage comprenant le stratifié pour l'emballage selon la revendication 9, dans lequel la couche non adsorbante (10) du stratifié pour le thermoscellage (100, 200) est agencée du côté qui doit être en contact avec le contenu d'un emballage.

11. Procédé de production d'un emballage, comprenant : l'application du stratifié pour le thermoscellage (100, 200) selon l'une quelconque des revendications 1 à 8 sur un substrat, et le thermoscellage avec les couches non adsorbantes (10) du stratifié pour le thermoscellage (100, 200) en opposition mutuelle.

FIG. 1

100

10

20

FIG. 2

200

10

20

10

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3232317 B
- JP 3689152 B
- JP 201328732 A
- WO 2014115485 A